# DEMANDE DE BREVET EUROPEEN

(11) **EP 1 230 839 A1**
(43) Date de publication de la demande: **14.08.2002**
(21) Numéro de dépôt: 02290309.0
(22) Date de dépôt: 08.02.2002
(51) Int. Cl.: A01G 17/06

(54) **Ensemble pour le palissage, notamment des vignes**

(30) Priorité: 09.02.2001 FR 0101798
(71) Demandeur: Fidler, Alain, 92260 Fontenay aux Roses (FR)
(72) Inventeur: Fidler, Alain, 92260 Fontenay aux Roses (FR)
(74) Mandataire: Dupuis-Latour, Dominique

(57) **Abrégé**

Cet ensemble comprend au moins deux piquets de tête (40), une pluralité de piquets intermédiaires (30) métalliques, des barrettes de soutien (10) montées sur ces piquets intermédiaires et des fils releveurs (50) fixes ou mobiles s'étendant d'un piquet de tête à l'autre en étant soutenus par les barrettes montées sur les piquets intermédiaires à une hauteur ajustée en alignement d'un piquet au suivant. Les barrettes sont des barrettes monobloc, le matériau des barrettes (10) est un matériau élastiquement déformable et les profils respectifs des barrettes (10) et des piquets intermédiaires (30) sont choisis de manière à permettre le clipsage de la barrette sur le piquet, la barrette étant montée sur le piquet par déformation élastique de la barrette sous contrainte extérieure et, après positionnement de celle-ci à la hauteur choisie sur le piquet, la barrette étant maintenue sur le piquet par la force de rappel élastique après relâchement de la contrainte extérieure.

## Description

L'invention concerne un ensemble pour le palissage.

Elle s'applique très avantageusement au palissage de la vigne et sera décrite dans ce cadre, mais cette application n'est pas limitative, et l'on comprendra que l'invention s'applique aussi bien au palissage d'autres végétaux et arbustes dont on souhaite étendre et lier les branches ou les rameaux afin de leur imposer une direction déterminée.

Traditionnellement, le palissage des vignes est réalisé en plantant une série de piquets en bois, en acier inoxydable ou galvanisé, ou en plastique, et sur lesquels sont fixés à la hauteur requise les fils de soutien des rameaux de vigne, fils appelés "fils releveurs".

Le FR-A-2 565 775 décrit ainsi un piquet muni d'une série de boutonnières permettant de soutenir un fil à différentes hauteurs prédéterminées.

La liaison des fils releveurs aux piquets peut également être opérée au moyen d'attaches ou barrettes de soutien, montées de façon fixe ou mobile sur les piquets.

L'invention concerne plus particulièrement les systèmes de palissage dans lesquels les piquets sont des piquets métalliques portant des barrettes de soutien pourvues de boutonnières recevant les fils.

La fixation des barrettes aux piquets peut être réalisée de plusieurs manières.

Une première technique consiste à fixer les barrettes par boulonnage sur les piquets, qui sont perforés à la hauteur où l'on souhaite monter la barrette. Cette technique assure une fixation robuste et permet un démontage ultérieur, mais elle est longue et coûteuse à mettre en oeuvre, car les piquets doivent être tous préalablement perforés. De plus, un outillage est nécessaire pour le boulonnage de la barrette sur le piquet. Enfin, la hauteur de la barrette par rapport au sol est imposée par la position du trou sur le piquet, ce qui exclut tout réajustement de la hauteur, sauf bien entendu à percer d'autres trous dans les piquets ou à prévoir des piquets comportant un grand nombre de trous, ce qui en accroît notablement le coût.

Une autre technique consiste à prévoir des barrettes comportant des ailes pouvant être tordues. La barrette est alors sertie à la hauteur souhaitée sur le piquet par déformation (déformation plastique) et pincement de ces parties déformables sur le piquet. On évite ainsi le perçage du piquet, et l'on préserve la liberté d'ajustement de la hauteur de pose de la barrette. Cette technique présente en revanche l'inconvénient de ne pas être réversible (la barrette peut être dessertie, mais n'est pas réutilisable), et d'imposer toujours le recours à un outillage pour la pose. Enfin, le réajustement en hauteur n'est bien entendu pas possible, à moins d'utiliser de nouvelles barrettes en remplacement des anciennes.

Le EP-A-0 141 469 décrit une autre technique encore, où chaque barrette est un ensemble démontable constitué de deux pièces distinctes emboîtables l'une dans l'autre par clavetage. Ces deux pièces comportent des rainures homologues qui leur permettent de coulisser l'une dans l'autre, et ces rainures ne sont pas tout à fait parallèles mais légèrement inclinées de manière à procurer un blocage à force en fin de course. Par ailleurs, celle des deux pièces de la barrette qui vient entourer le piquet est déformable, pour pouvoir être mise en place autour du piquet, mais pour assurer le maintien de l'ensemble sur le piquet à la hauteur choisie il est nécessaire de venir enfoncer la pièce complémentaire permettant le blocage à force. Cette barrette est efficace, mais elle est particulièrement coûteuse à réaliser : elle implique en effet de fabriquer des pièces moulées en matière plastique avec des tolérances assez précises et une qualité bien contrôlée de la matière pour permettre un clavetage efficace et durable, en dépit du vieillissement du plastique sous l'effet des intempéries et des cycles thermiques. Ce coût de fabrication rend le système impraticable à grande échelle, comme dans le cas des vignobles qui peuvent s'étendre sur plusieurs hectares ou dizaines d'hectares.

Le but de l'invention est de remédier à l'ensemble des inconvénients précités, en proposant un ensemble de palissage piquets/barrettes qui soit à la fois très économique à produire, simple à poser (sans outillage), et qui permette un réajustement en hauteur facile et rapide, sans dégradation des propriétés mécaniques de la barrette ni de la liaison piquet/barrette.

L'ensemble de palissage selon l'invention est un ensemble du type précité réalisé à partir d'éléments métalliques, c'est-à-dire comprenant, plus précisément, au moins deux piquets de tête, une pluralité de piquets intermédiaires métalliques, des barrettes de soutien montées sur ces piquets intermédiaires et des fils releveurs fixes ou mobiles s'étendant d'un piquet de tête à l'autre en étant soutenus par les barrettes montées sur les piquets intermédiaires à une hauteur ajustée en alignement d'un piquet au suivant.

Essentiellement, l'invention consiste à prévoir une barrette sous forme de "barrette-clip" monobloc en matériau élastiquement déformable, ce qui permet de la mettre en place sur le piquet par simple clipsage, en jouant sur l'élasticité de la matière. Dès lors, ces barrettes-clips peuvent être déplacées à volonté afin de procéder à des réglages au plus fin de la hauteur, pour un parfait alignement des fils releveurs.

Plus précisément, l'ensemble de l'invention est caractérisé en ce que les barrettes sont des barrettes monobloc, en ce que le matériau des barrettes est un matériau élastiquement déformable et en ce que les profils respectifs des barrettes et des piquets intermédiaires sont choisis de manière à permettre le clipsage de la barrette sur le piquet, la barrette étant montée sur le piquet par déformation élastique de la barrette sous contrainte extérieure et, après positionnement de celle-ci à la hauteur choisie sur le piquet, la barrette étant maintenue sur le piquet par la force de rappel élastique après relâchement de la contrainte extérieure.

Les piquets intermédiaires et/ou de tête sont avantageusement des profilés métalliques de section uniforme.

De préférence, les piquets intermédiaires sont des piquets présentant une section en L symétrique, et comportent de préférence un biseau d'extrémité apte à faciliter l'insertion de la barrette à cet endroit.

La barrette présente avantageusement une section en oméga, les ailes de cet oméga comportant des boutonnières aptes à supporter les fils releveurs, et l'âme comportant une partie centrale et des parties coudées présentant, ensemble, un profil interne homologue du profil interne du piquet intermédiaire. En particulier, l'angle de dièdre du profilé constituant le piquet intermédiaire est supérieur à l'angle défini par les parties coudés de l'âme de la barrette.

Le piquet de tête peut être un profilé à section carrée prolongé à deux sommets opposés par deux ailes droites s'étendant en opposition suivant une direction commune, le piquet de tête étant pourvu sur au moins l'une de ces ailes de perforations aptes à permettre la fixation d'un fil releveur, ou la retenue d'une esse d'accrochage d'un fil releveur.

On va maintenant décrire un exemple de mise en oeuvre de l'invention, en référence aux dessins annexés.

Les figures 1 et 2 sont des vues, respectivement de dessus et en élévation, d'une barrette selon l'invention.

La figure 3 est une section transversale du piquet intermédiaire destiné à recevoir la barrette.

La figure 4 est une section transversale d'un piquet de tête.

La figure 5 montre, vu de dessus, l'ensemble formé par le piquet intermédiaire et la barrette clipsée sur ce dernier.

La figure 6 est une vue générale montrant l'ensemble des éléments de l'invention, prêt au palissage.

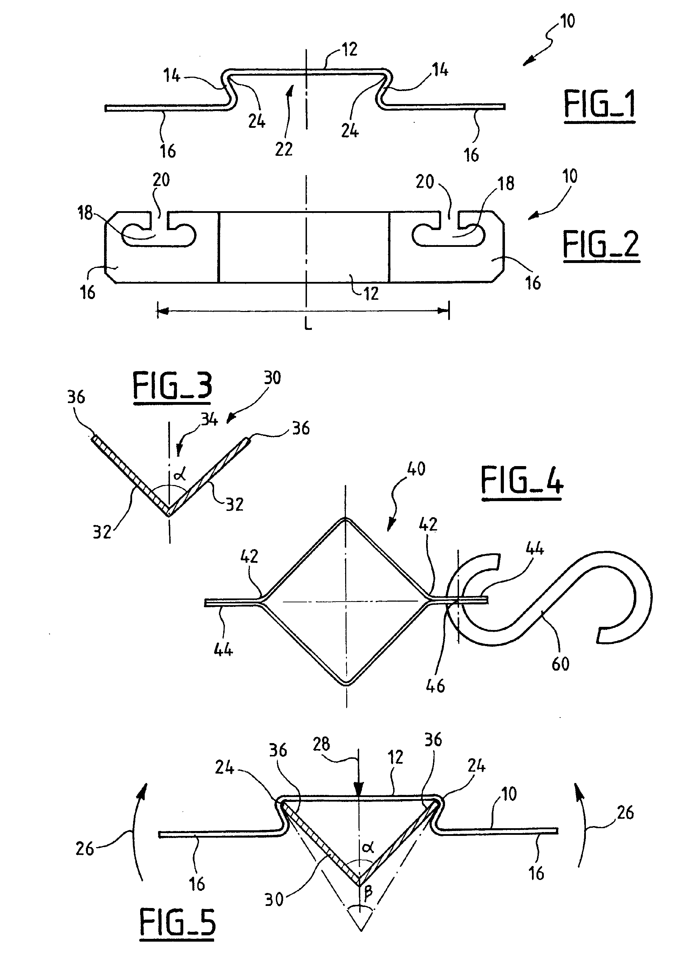

Les figures 1 et 2 montrent un exemple de réalisation de la barrette-clip monobloc selon l'invention, cette forme n'étant bien entendu pas limitative dès lors que la barrette est susceptible d'être fixée par clipsage sur un piquet présentant un profil homologue.

Cette barrette 10 présente un profil en oméga, avec une âme formée d'une partie centrale 12 prolongée à chacune de ses extrémités par une partie coudée 14, elle-même contre-coudée pour se prolonger par des ailes d'extrémités 16. La barrette 10 est avantageusement symétrique, les ailes 16 étant coplanaires et s'étendant dans un plan parallèle à celui de la partie centrale 12. Chacune des ailes porte une boutonnière 18 destinée à recevoir un fil releveur et débouchant vers l'extérieur par une ouverture étroite 20, de largeur juste suffisante pour permettre d'y passer le fil.

La barrette 10 est réalisée avantageusement par pliage d'un feuillard d'épaisseur 1,5 mm en acier inoxydable élastique. L'utilisation d'acier inoxydable ne nécessite aucun traitement de surface, et élimine donc tout risque sanitaire de contamination du végétal qui sera palissé. Les dimensions typiques d'une telle barrette sont : longueur hors-tout 110 mm ; longueur de la partie centrale 47 mm ; entraxe L des boutonnières 80 mm ; angle de la partie coudée 14 par rapport au plan de la partie centrale 12 55°.

Cette barrette est destinée à être montée sur un piquet 30 (figure 3), qui est avantageusement un simple profilé métallique en L formé de deux ailes 32 symétriques, avec un angle de dièdre α = 90 °. La longueur en section droite des ailes 32 est par exemple de 31 mm, le profilé 30 étant réalisé par pliage d'un fer plat d'épaisseur 1,5 mm.

L'ensemble de palissage comporte enfin des piquets de tête 40 placés à chaque extrémité d'un rang de vigne, et qui présentent le profil illustré figure 4, à savoir un profil carré dont les deux sommets opposés 42 sont prolongés à leurs extrémités par des ailes 44 coplanaires entre elles. L'une au moins de ces ailes porte des perforations 46 permettant le passage du fil ou d'une esse d'accrochage d'un fil (référencée 60). En section, le carré central a, typiquement, un côté d'environ 34 mm et les ailes 44, une longueur d'environ 25 mm. Ce piquet de tête peut être réalisé, comme illustré, à partir de deux fers plats emboutis longitudinalement à 90° pour leur donner la forme voulue, puis disposés face-à-face et assemblés en les soudant par points.

La figure 5 illustre, vue de dessus, la barrette 12 montée sur le piquet homologue 30 : la concavité 22 de l'oméga de la barrette 10 fait face à la région intérieure 34 du dièdre formé par le piquet 30, les extrémités libres 36 du profil de ce piquet 30 venant s'insérer dans la courbure interne 24 de l'oméga formée entre la partie centrale et les parties coudées 14. Avantageusement, pour permettre un clipsage efficace par élasticité, l'angle de dièdre α du profilé constituant le piquet 30 (ici α = 90°) est supérieur à l'angle β défini par les parties planes coudés 14 (ici β = 70°).

Avec cette configuration, pour mettre en place ou déplacer la barrette 10 sur le piquet 30, il suffit d'exercer sur les ailes 16 de la barrette une torsion (flèche 26) éventuellement combinée à un appui sur la partie centrale 12 (flèche 28), manoeuvre qui peut être réalisée aisément à la main, sans aucun outil particulier.

On notera en outre que l'effort de clipsage, une fois la barrette montée sur le piquet, permet un excellent maintien de la barrette excluant tout déplacement non souhaité de celle-ci, même en cas d'utilisation de systèmes mécaniques de vendange ou de cueillette, qui utilisent des systèmes vibrants.

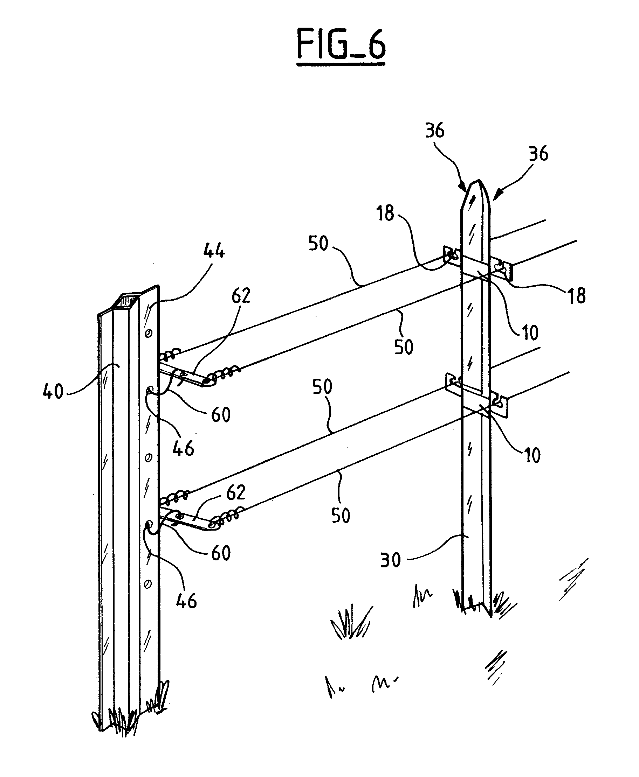

L'ensemble de palissage une fois installé présente la configuration illustrée figure 6, qui montre un piquet de tête 40, un piquet intermédiaire 30, deux barrettes 10 montées à la hauteur voulue sur ce piquet intermédiaire 30, et deux paires de fils releveurs 50. L'extrémité de chacun des fils releveurs 50 est fixée à un palonnier 62, lui-même relié au piquet de tête 40 par l'intermédiaire d'une esse d'accrochage 60 montée entre l'un des trous 46 du piquet de tête et un trou médian du palonnier (en variante, il est également possible de fixer directement à l'esse 60 les deux fils releveurs 50, ceux-ci s'écartant progressivement jusqu'à la barrette de soutien 10 du premier piquet intermédiaire 30). Le fil releveur passe ensuite dans la boutonnière correspondante 18 de la barrette 10 du piquet intermédiaire adjacent, et ainsi de suite jusqu'au piquet d'extrémité situé à l'autre bout du rang de vigne.

Les barrettes 10 peuvent être clipsées sur les piquets intermédiaires 30 en les plaçant à la hauteur désirée puis en les clipsant en place par pression ; elles peuvent également, notamment pour les plus hautes d'entre elles, être insérées par le haut du piquet (en les déformant légèrement), puis abaissées jusqu'à la hauteur requise en les faisant glisser le long du piquet, enfin bloquées en place par relâchement de la contrainte de clipsage. À cet effet, les piquets intermédiaires 30 comportent avantageusement en partie supérieure, sur chaque aile, un biseau 38 pour permettre une insertion plus aisée de la barrette.

Le profil particulier du piquet de tête, avec les ailes 44 orientées dans la direction du rang de vigne, lui confère une grande résistance à la traction, ce qui est important compte tenu de la sollicitation qu'il doit supporter, qui résulte de la tension des fils releveurs. Ce profil particulier permet notamment l'économie d'un piquet de renfort, généralement nécessaire avec les ensembles de palissage utilisés jusqu'à présent.

En ce qui concerne les piquets intermédiaires 30, leur profil en L et la section choisie permettent une mise en place aisée, avec une excellente assise, le cas échéant, dans les terrains meubles.

On notera que le piquet intermédiaire 30 selon l'invention est planté dans le sol dans une position telle que le plan bissecteur du dièdre soit situé dans la direction du rang de vigne. Cette configuration est différente de celle utilisée habituellement avec les piquets métalliques de type cornière portant des barrettes vissées ou serties : en effet, dans ce dernier cas, il est nécessaire de disposer d'une face (la face qui supportera la barrette) qui soit perpendiculaire au rang de vigne, l'autre face s'étendant donc dans un plan confondu avec celui du rang de vigne (dans le cas, le plus courant, d'un profilé en L à deux ailes perpendiculaires).

## Revendications

1. Un ensemble pour le palissage, notamment des vignes, comprenant au moins deux piquets de tête (40), une pluralité de piquets intermédiaires (30) métalliques, des barrettes de soutien (10) montées sur ces piquets intermédiaires et des fils releveurs (50) fixes ou mobiles s'étendant d'un piquet de tête à l'autre en étant soutenus par les barrettes montées sur les piquets intermédiaires à une hauteur ajustée en alignement d'un piquet au suivant,
**caractérisé en ce que** les barrettes sont des barrettes monobloc, **en ce que** le matériau des barrettes (10) est un matériau élastiquement déformable et **en ce que** les profils respectifs des barrettes (10) et des piquets intermédiaires (30) sont choisis de manière à permettre le clipsage de la barrette sur le piquet, la barrette étant montée sur le piquet par déformation élastique de la barrette sous contrainte extérieure et, après positionnement de celle-ci à la hauteur choisie sur le piquet, la barrette étant maintenue sur le piquet par la force de rappel élastique après relâchement de la contrainte extérieure.

2. L'ensemble de la revendication 1, dans lequel les piquets intermédiaires (30) et/ou de tête (40) sont des profilés métalliques de section uniforme.

3. L'ensemble de la revendication 2, dans lequel les piquets intermédiaires (30) sont des piquets présentant une section en L symétrique.

4. L'ensemble de la revendication 2, dans lequel les piquets intermédiaires (30) comportent en outre un biseau d'extrémité (38) apte à faciliter l'insertion de la barrette à cet endroit.

5. L'ensemble de la revendication 1, dans lequel la barrette (10) présente une section en oméga, les ailes (16) de cet oméga comportant des boutonnières (18) aptes à supporter les fils releveurs, et l'âme (12, 14) comportant une partie centrale (12) et des parties coudées (14) présentant, ensemble, un profil interne homologue du profil interne du piquet intermédiaire.

6. L'ensemble de la revendication 5, dans lequel l'angle de dièdre (α) du profilé constituant le piquet intermédiaire (30) est supérieur à l'angle (β) défini par les parties coudés (14) de l'âme de la barrette (10).

7. L'ensemble de la revendication 1, dans lequel le piquet de tête (40) est un profilé à section carrée prolongé à deux sommets opposés (42) par deux ailes droites (44) s'étendant en opposition suivant une direction commune, le piquet de tête étant pourvu sur au moins l'une de ces ailes de perforations (46) aptes à permettre la fixation d'un fil releveur (50), ou la retenue d'une esse (60) d'accrochage d'un fil releveur.

8. Une barrette (10) de soutien de fil releveur (50) pour un ensemble de palissage, notamment de palissage des vignes, cette barrette (10) étant destinée à être montées sur un piquet (30) à une hauteur prédéterminée, barrette **caractérisée en ce qu'**elle est monobloc, **en ce qu'**elle est réalisée en un matériau élastiquement déformable et **en ce qu'**elle présente, par rapport au profil du piquet (30), un profil homologue choisi de manière à permettre le clipsage de la barrette sur le piquet, la barrette étant montée sur le piquet par déformation élastique de la barrette sous contrainte extérieure et, après positionnement de celle-ci à la hauteur choisie sur le piquet, la barrette étant maintenue sur le piquet par la force de rappel élastique après relâchement de la contrainte extérieure.

9. La barrette de la revendication 1, présentant une section en oméga, les ailes (16) de cet oméga comportant des boutonnières (18) aptes à supporter les fils releveurs, et l'âme (12, 14) comportant une partie centrale (12) et des parties coudées (14) présentant, ensemble, un profil interne homologue du profil interne du piquet.

10. La barrette de la revendication 9, dans lequel l'angle (β) défini par les parties coudés (14) de l'âme est inférieur à l'angle de dièdre (α) du profilé constituant le piquet (30).
